# EUROPEAN PATENT SPECIFICATION

(11) **EP 1 166 998 B1**
(45) Date of publication and mention of the grant of the patent: **27.12.2006**
(21) Application number: 01112557.2
(22) Date of filing: 23.05.2001
(51) Int. Cl.: B29C 63/02

(54) **Method for protecting web or sheet material**
Verfahren zum Schützen eines bandförmigen oder bogenförmigen Material
Procédé pour protéger un matériau en bande ou en plaque

(30) Priority: 20.06.2000 FI 20001466
(43) Date of publication of application: 02.01.2002
(73) Proprietor: Outokumpu Oyj, 02200 Espoo (FI)
(72) Inventor: Rantamaa, Kari, 95420 Tornio (FI); Karjalainen, Kari, 95450 Tornio (FI); Taulavuori, Tero, 95450 Tornio (FI); Ylitalo, Mikko, 95450 Tornio (FI); Alalääkkölä, Markku, 95420 Tornio (FI); Kavonius, Kari, 00170 Helsinki (FI)
(74) Representative: Zipse + Habersack

(56) References cited:
- WO-A-01/41968
- US-A- 4 707 207
- PATENT ABSTRACTS OF JAPAN vol. 1996, no. 02, 29 February 1996 (1996-02-29) & JP 07 278876 A (HITACHI CABLE LTD), 24 October 1995 (1995-10-24)
- DATABASE WPI Section Ch, Week 198440 Derwent Publications Ltd., London, GB; Class A81, AN 1984-246169 XP002241584 & JP 59 147382 A (URABE T), 23 August 1984 (1984-08-23)

## Description

The present invention relates to a method for protecting web or sheet material according to claim 1.

A web-like or sheet-like material, particularly metal sheet material, the surface of which should be protected in the further treatment steps of the material, is usually protected, at least on one side, by a protective film meant to be detached. For example on the surface of stainless or acid-proof steel sheet, there is attached a plastic film, for instance a PVC or PE plastic film, the purpose of which is to protect the surface of the product in the various treatment steps, for example against scratching. Conventionally the protective film has been attached for instance by conducting the sheet product to be protected and the protective film through the nip of a pair of compression rollers, so that the protective film provided with some adhesive agent sticks to the surface of the sheet product. One of the drawbacks of the known arrangement has been that stacked sheets provided with protecting plastic film stick together, particularly when they are unpacked from the stack one by one. This has caused a great deal of trouble for example in the automatic feeding device of the sheet work center that handles metal sheets. Sheets that are stuck together result in feeding disturbances and are thus harmful for the whole production. Another remarkable drawback is observed in the laser cutting of sheets that are provided with protecting plastic film; there the cutting gases have access to between the sheet and the protective film. These gases can create a so-called gas bubble in between the protective film and the sheet, i.e. a bulge in the protective film. When the shearing nozzle has hit this bulge in the protective film, the collision has resulted for example in a shifting of the sheet being cut, in an interruption of the cutting process and in damaging the sheet.

In prior art it is known to provide a band-shaped metallic base material with sticking masking tapes for making the metallic base material ready for a galvanisation, as this is for example explained in JP 07 278 876.

It is further known according to document US-A-4,707,202 to apply a protective foil to a flat sheet material, wherein perforation cuts are provided within the foil to define cut lines for being able to remove parts of the foil along said perforations, with a rest of the foil remaining on the sheet plate.

The object of the present invention is to realize a completely new arrangement for protecting the surface of web or sheet material, particularly the surface of metal sheets, by means of which arrangement the drawbacks of the prior art can be avoided.

The invention is based on an idea according to which in the protective film, there are made apertures, preferably slots, at given intervals. When defined more precisely, the invention is characterized by what is set forth in the appended claims.

The arrangement according to the invention has several remarkable advantages. The apertures made in the protective film cause air holes that facilitate the detaching of stacked sheets when unpacking the stack. When the apertures provided in the protective film extend as far as the sheet edges, the detaching of the stacked sheets is further improved. By making these apertures sufficiently wide, the provision of an adequate air hole is ensured, and thus the detaching of the sheets of each other is further improved. When the protective film according to the invention is used on the surface of a sheet or web product, the handling properties of the products is improved with respect to the further treatment of said products. At the same time, the protecting qualities of the protective film can be maintained on a sufficient level. By making the apertures so that slots are cut in the protective film, there is achieved an extremely viable and efficient arrangement also for the further treatment of the sheets, for instance in order to prevent the formation of gas bubbles that are possibly created during laser cutting. The arrangement according to the invention is extremely well suited for metals that have a high-quality surface, particularly for stainless or acid-proof steel sheets.

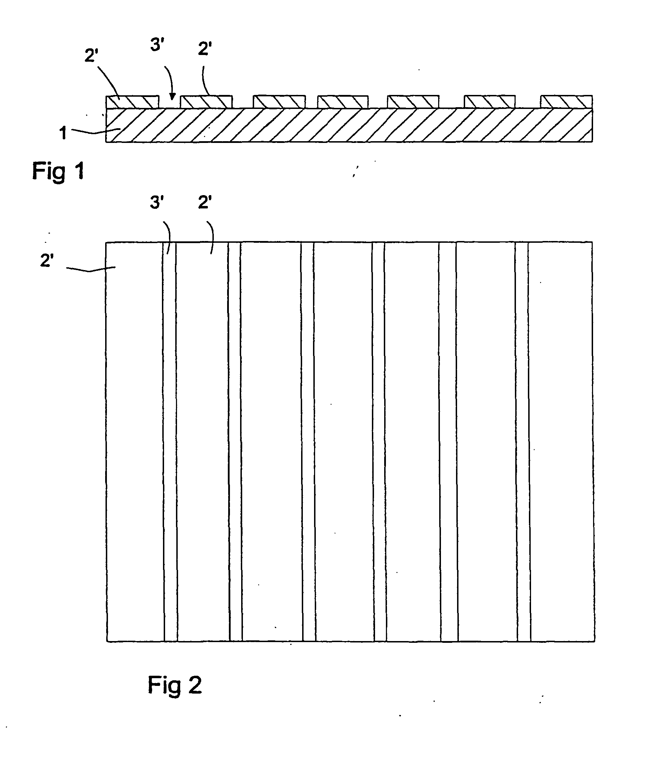

The invention is explained in more detail below, with reference to the appended drawings, where
Figure 1 illustrates in cross-section a sheet or web material that is provided with the protective film according to the invention,
Figure 2 is a top-view illustration of a sheet product provided with the protective film according to the invention,
Figure 3 illustrates another preferred embodiment of the arrangement according to the invention,
Figure 4 is a simplified diagram illustrating a method according to the invention.

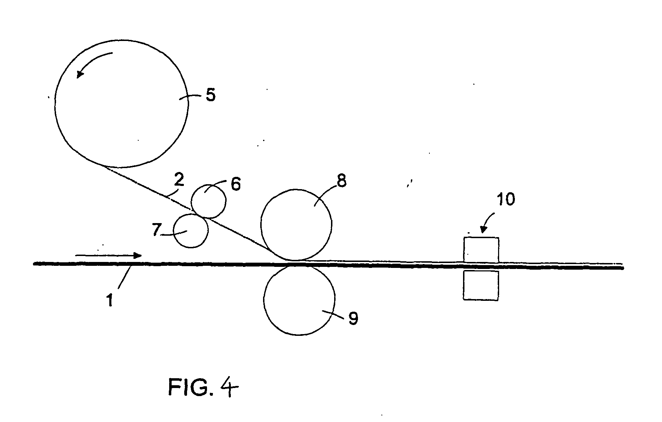

The invention relates to a method for protecting at least one surface of a sheet or web material 1, particularly metal sheet or web material, in which method on the surface of the sheet or web material, there is brought a protective film 2 designed to be detachable. In the protective film 2 there is made, prior to attaching it onto the surface of the sheet or web material 1, apertures 3 and/or the protective film is formed of several adjacent protective film parts 2', so that a slot 3' is left therebetween. The apertures 3 and 3' are typically formed by making longitudinal cuts in the protective film. Apertures 3 and/or slots 3' are made in the protective film 2 essentially along the whole length and/or width thereof. Said apertures 3 and/or slots 3' can be made while bringing the protective film 2 onto the surface of the sheet or web material 1, or they can be made in the protective film already at an earlier, separate stage. In the case of figure 4, the protective film 2 is conducted through a cutting unit 6, 7 prior to attaching it onto the surface of the sheet or web material 1. The attaching of the protective film 2 is typically carried out by conducting the protective film 2 and the sheet or web material 1 for example through the nip of a pair of compression rollers 8, 9. The protective film 2 is typically provided with the fastening agent, such as glue, in advance.

In the example of figure 4, there is illustrated a simplified embodiment of the method according to the invention. There web material 1, such as metal web, is moved in the direction of the arrow. Protective film 2, which is arranged for instance in a roller 5, is conducted to the cutting stage, where apertures or cuts are made in the protective film web for instance by means of a cutting roller 6. The protective film web is conducted in between the cutting roller 6 and the counterroller 7. The cutting roller 6 can comprise several cutting blades that typically make longitudinal cuts in the protective film. Naturally the cutting roller 6 can be replaced by several separate longitudinal cutting blades. After the cutting step, both webs, the material web 1 and the protective film web 2, are conducted through the nip of a pair of compression rollers 8, 9, so that the protective film sticks to the material surface. Thereafter the web provided with the protective film can, when desired, be cut into sheets by means of a transversal cutting unit 10.

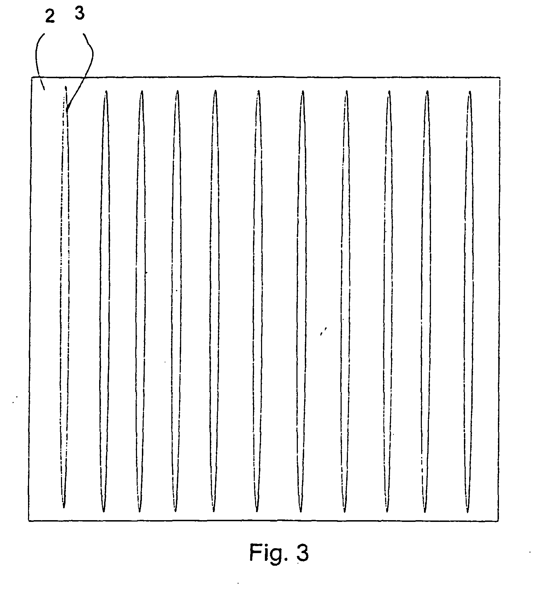

The protective film 2 comprises particularly elongate apertures 3, or the protective film 2 is made of several adjacent protective film parts 2' that are spaced apart, so that in between adjacent protective film parts 2', there is left a slot 3'. Typically the elongate apertures are cuts. The distance between adjacent apertures 3 or slots 3' is typically 5 - 500 mm, preferably 50 - 200 mm. On one side of the protective film 2, there is generally arranged some fastening agent, such as glue. The protective film material can be any suitable material. Particularly suitable materials for protecting metal sheets are for instance PE and PVC plastic films. The protective film 2 can also be a multilayer material. The thickness of the protective film 2 can vary according to the properties of the protective film material in question. When using a plastic film for protecting metal sheet or web material, typical thicknesses for the protective film 2 are 10 - 500 µm, advantageously 50 -120 µm. Typically the width of the elongate apertures/slots/cuts 3 and 3' made in the protective plastic are 0,5-5,0 mm, advantageously 1,0 - 3,0 mm. Similar distances are advantageous for protective film parts that are located adjacently. The apertures made in the protective film can also represent some other form (figure 3) .

Said protective film comprises particularly elongate apertures 3, or else the protective film 2 is made of several adjacent protective film parts 2' that are spaced apart, so that in between adjacent protective film parts, there is left a slot 3'. Apertures 3 and/or slots 3' are made in the protective film 2 or 2' essentially along the whole length and/or width of the product 1. The thickness of the protective film 2 can vary according to the properties of the protective film material. When a plastic film is used for protecting metal sheet or web material, a typical thickness for the protective film is 10 - 500 µm, advantageously 50 - 120 µm. The typical width of the elongate apertures (cuts) made in the protective film is advantageously 0,5 - 5,0 mm, preferably 1,0 - 3,0 mm. Corresponding measures are likewise typical for adjacently placed protective film parts 2' and for the slots 3' therebetween.

For a man skilled in the art, it is obvious that the invention is not restricted to the above described embodiments only, but several modifications can be made within the scope of the appended claims.

## Claims

1. A method for protecting at least one surface of a metal sheet or web material in the further treatment steps of the material, in which method on the surface of the sheet or web material, there is brought a detachable protective film,
wherein in the protective film (2) there are made, prior to attaching it onto the surface of the sheet or web material (1), apertures (3), or the protective film is formed of several adjacent protective film parts (2') that are spaced apart, so that a slot (3') is left there between, wherein the apertures (3) and/or slots (3') each are made in the protective film (2) essentially along the whole length and/or width thereof,
and wherein the method comprises the further treatment steps of:
- stacking metal sheets provided with the protective film and unpacking said metal sheets one by one, or
- laser cutting the metal sheets provided with the protective film.

2. A method according to claim 1, **characterized in that** the apertures (3) or slots (3') are formed by making longitudinal cuts in the protective film (2).

3. A method according to any of the claims 1-2, **characterized in that** the apertures (3) and/or slots (3') are made while bringing the protective film (2, 2') onto the surface of the sheet or web material (1).

4. A method according to any of the claims 1-3, **characterized in that** the protective film (2) is conducted through a cutting unit (6, 7) prior to attaching it onto the surface of the sheet or web material (1).

## Patentansprüche

1. Verfahren zum Schützen mindestens einer Oberfläche eines metallenen Blattes oder Bahnmaterials in den weiteren Bearbeitungsschritten des Materials, in welchem Verfahren auf die Oberfläche des Blattes oder Bahnmaterials ein ablösbarer Schutzfilm gebracht wird, wobei in den Schutzfilm (2) vor dem Auftragen desselben auf die Oberfläche des Blattes oder Bahnmaterials (1) Öffnungen (3) gemacht werden, oder der Schutzfilm ist aus mehreren benachbarten Schutzfilm-Teilen (2') gebildet, die beabstandet sind, so dass ein Schlitz (3') dazwischen verbleibt, wobei die Öffnungen (3) und/oder Schlitze (3') jeweils in dem Schutzfilm (2) im Wesentlichen entlang seiner gesamten Länge und/oder Breite gemacht sind, und wobei das Verfahren die weiteren Bearbeitungsschritte umfasst,
- Stapeln der metallenen Blätter, die mit dem Schutzfilm versehen sind, und Abnehmen dieser Metallblätter eines nach dem anderen, oder
- Schneiden der mit Schutzfilm versehenen metallenen Blätter mittels Laser.

2. Verfahren nach Anspruch 1,
**dadurch gekennzeichnet, dass** die Öffnungen (3) oder Schlitze (3') gebildet werden, indem längliche Schnitte in den Schutzfilm (2) eingebracht werden.

3. Verfahren nach einem der Ansprüche 1- 2,
**dadurch gekennzeichnet, dass** die Öffnungen (3) und/oder Schlitze (3') eingebracht werden, während der Schutzfilm (2, 2') auf die Oberfläche des Blattes oder Bahnmaterials (1) gebracht wird.

4. Verfahren nach einem der Ansprüche 1- 3,
**dadurch gekennzeichnet, dass** der Schutzfilm (2) durch eine Schneideeinheit (6, 7) geführt wird, bevor er auf der Oberfläche des Blattes oder Bahnmaterials (1) festgelegt wird.

## Revendications

1. Procédé destiné à protéger au moins une surface d'un matériau en plaque ou en bande métallique dans les étapes de traitement suivantes du matériau,
dans lequel procédé un film protecteur détachable est appliqué sur la surface du matériau en plaque ou en bande, des ouvertures (3) étant effectuées dans le film protecteur (2) avant de le fixer sur la surface du matériau en plaque ou en bande (1), ou le film protecteur étant formé de différents éléments de films protecteurs adjacents (2') espacés les uns des autres, de telle manière qu'une fente (3) se forme entre eux, les ouvertures (3) et/ou les fentes (3') étant chacune effectuées dans le film protecteur (2) essentiellement sur toute la longueur et/ou largeur de ce dernier,
et le procédé comportant les étapes de traitement suivantes de :
- superposition des plaques métalliques munies de film protecteur et dépaquetage desdites plaques une par une, ou
- découpe laser des plaques métalliques munies du film protecteur.

2. Procédé selon la revendication 1,
**caractérisé par le fait que** les ouvertures (3) ou fentes (3') sont formées en effectuant des coupes longitudinales dans le film protecteur (2).

3. Procédé selon l'une quelconque des revendications 1 à 2,
**caractérisé par le fait que** les ouvertures (3) et/ou fentes (3') sont effectuées en appliquant le film protecteur (2, 2') sur la surface du matériau en plaque ou en bande (1).

4. Procédé selon l'une quelconque des revendications 1 à 3,
**caractérisé par le fait que** le film protecteur (2) est amené à travers une unité de découpe (6, 7) avant de le fixer à une surface du matériau en plaque ou en bande (1).
